(19) Europäisches Patentamt
European Patent Office
Office européen des brevets

(11) **EP 1 739 144 A1**

(12) **EUROPEAN PATENT APPLICATION**
published in accordance with Art. 158(3) EPC

(43) Date of publication:
**03.01.2007 Bulletin 2007/01**

(21) Application number: **05720905.8**

(22) Date of filing: **16.03.2005**

(51) Int Cl.:
*C09D 175/04* (2006.01)  *C09D 5/02* (2006.01)
*C09D 5/08* (2006.01)  *C23C 26/00* (2006.01)

(86) International application number:
**PCT/JP2005/004651**

(87) International publication number:
**WO 2005/092998 (06.10.2005 Gazette 2005/40)**

(84) Designated Contracting States:
**DE FR GB IT**

(30) Priority: **29.03.2004 JP 2004094799**

(71) Applicant: **DAI-ICHI KOGYO SEIYAKU CO., LTD.**
**Kyoto-shi,**
**Kyoto 600-8873 (JP)**

(72) Inventors:
• **WADA, Hidekazu**
**Kyoto-shi**
**Kyoto 616-8203 (JP)**

• **ITO, Shuichi**
**Kyoto-shi**
**Kyoto 615-0806 (JP)**

(74) Representative: **Calamita, Roberto et al**
**Frank B. Dehn & Co.**
**St Bride's House**
**10 Salisbury Square**
**London EC4Y 8JD (GB)**

(54) **WATER-BASED COATING COMPOSITION FOR SURFACE TREATMENT OF METALLIC MATERIAL**

(57)    In order to provide a water-based coating composition for surface treatment of metallic materials having excellent chemical resistance, corrosion resistance, solvent resistance and adhesion, a cationic aqueous urethane resin (F) is prepared, which is obtained by chain-elongation of a cationic urethane prepolymer (D) using water or a polyamine compound (E), the cationic urethane prepolymer (D) being formed by neutralized a tertiary amino group by an acid or quaternarized the tertiary amino group by quaternarizing agent, the tertiary amino group being included in a urethane prepolymer comprising, as components thereof, a compound (A) having two or more active hydrogen atoms, an organic polyisocyanate (B), and a chain elongation agent (C) having the tertiary amino group.

**Description**

FIELD OF THE INVENTION

The present invention relates to water-based coating compositions for surface treatment of metallic materials. More particularly, the present invention is concerned with water-based coating compositions for surface treatment of metallic materials prepared by using cationic aqueous urethane resins which have excellent chemical resistance, corrosion resistance, solvent resistance and adhesion.

BACKGROUND ART

Conventionally, water-based coating compounds are used as surface treating agent for metallic materials such as steel plate used for home electric appliances, building materials, automobiles etc. from a stand point of environmental contamination, industrial hygiene and safety. Although polyurethane resins, epoxy resins, acryl resins, polyester resins etc. are used as a resin component in these surface treating agents, polyurethane resin is especially suitable among others because of the physical balance between strength and elongation of the coating film thereof. Among the polyurethane resins, anionic water-based coating compounds are often used.

In the conventional art, investigations have been made on a water-based coating composition comprising a urethane resin having acid amide bond (Patent Document 1), a water-based coating composition comprising an aqueous resin having carboxylic group and acid amide bond, a specific metal compound and a silicon compound (Patent Document 2), and compounding a specific ketone compound, a ketimine compound and a benzotriazole compound (Patent Document 3).

Even if, however, these aqueous resins are used, various performances such as alkaline resistance, corrosion resistance and adhesion are not attained in a sufficient degree. Especially, these aqueous resins have not enough resistance to alkaline which is necessary for the alkali degreasing process in the post-process after coating of paintwork. It is the present condition that such awater-based coating composition of alkali-resistant is not obtained. This problem is caused by the fact that the carboxylic acid part lowers anti-alkaline property which is included in many type of anionic water-based coating compounds.

(Patent Document 1) Japanese Patent Publication 2003-129253

(Patent Document 2) Japanese Patent Publication 2003-201579

(Patent Document 3) Japanese Patent Publication 2003-226728

DISCLOSURE OF THE INVENTION

PROBLEM TO BE SOLVED BY THE INVENTION

Thus, it is an objective of the invention to provide a water-based coating composition for surface treatment of metallic materials that can develop excellent performance of chemical resistance, corrosion resistance, solvent resistance and adhesion to substrate which are insufficiently performed by the anionic water-based coating compounds conventionally used.

MEANS FOR SOLVING THE PROBLEMS

The present invention is achieved based on the findings that a water-based coating composition for surface treatment of metallic material comprising a cationic water-based urethane resin (F) which is obtained by chain-elongation of a cationic urethane prepolymer (D) using water or a polyamine compound (E) develops performance of adhesion, corrosion resistance, solvent resistance and chemical resistance. The cationic urethane prepolymer (D) is formed by neutralized a tertiary amino group included in a urethane prepolymer by an acid or quaternarized the tertiary amino group by quaternarizing agent. The urethane prepolymer comprises, as components thereof, a compound (A) having two or more active hydrogen atoms, an organic polyisocyanate (B), and a chain elongation agent (C) having the tertiary amino group.

EFFECT OF THE INVENTION

The water-based coating composition for surface treatment of metallic material of the present invention brings excellent corrosion resistance, chemical resistance, solvent resistance and adhesion in spite of water-based system since it is prepared by introducing a tertiary amino group into a urethane prepolymer and then neutralized the tertiary amino group by an acid or quaternarized by quaternarizing agent.

BEST MODE FOR CARRYING OUT AN INVENTION

As the compound (A) having two or more active hydrogen atoms in the present invention, well-known compounds in the urethane industry may be used. The compound (A) has two or more hydroxyl groups, amino groups or mercapto groups at the end of the molecule or in the molecule. Exemplified are not only generally well-known polyether, polyester, polyetherester, polythioether, polyacetal, polybutadiene, polysiloxane and the like, but also fluorinated derivatives, vegetable oil derivatives and the like. A compound having two or more hydroxyl groups at the end of the molecule is preferable as the compound (A). In addition, these compound (A) having two or more active hydrogen atoms preferably has a molecular weight of 50-5,000.

Concretely speaking, as the compound (A) having two or more active hydrogen atoms, polyhydric alcohols are exemplified such as ethylene glycol, propylene glycol, propanediol, butane diol, pentane diol, 3-methyl-1,5-pentane diol, hexane diol, neopentyl glycol, diethylene glycol, triethylene glycol, tetraethylene glycol, polyethylene glycol, dipropylene glycol, tripropylene glycol, 1,4-cyclohexane dimethanol, bisphenol A, bisphenol F, bis phenol S, hydrogenated bisphenol A, dibromo bisphenol A, 1,4-cyclohexane dimethanol, dihydroxy ethyl terephthalate, hydroquinone dihydroxy ethyl ether, trimethylolpropane, glycerin, pentaerythritol and the like. In addition, oxyalkylene derivatives of these polyhydric alcohols; and esterified compounds between these polyhydric alcohols or these oxyalkylenes and polyvalent carboxylic acids, anhydrides of the polyvalent carboxylic acids or polyvalent carboxylic acid esters may also be exemplified. Further, polyol compounds ormodified compounds thereof may also be used such as poly carbonate polyol, poly caprolactone polyol, polyester polyol, poly thioether polyol, polyacetal polyol,poly tetramethylene glycol, polybutadienepolyol, caster oil polyol, soybean oil polyol, fluorine polyol, silicon polyol and the like, and alkylene oxides such as ethylene oxide, propylene oxide, butylene oxide and the like may further be used. These compound (A) having two or more active hydrogen atoms may be used as a single component or a mixture of two or more components.

In one embodiment, the compound (A) having two or more active hydrogen atoms preferably includes at least one active hydrogen containing compound (A1) selected from oxyalkylene derivatives of bisphenol A, olefinic polyols and polyols of vegetable oils. Examples of the olefinic polyols may include polybutadiene polyol, polyisoprene polyol, hydrogenated polybutadiene polyol, hydrogenated polyisoprene polyol and the like. Examples of the polyol of vegetable oils may include various derivatives of vegetable oils such as denaturated soybean oil, caster oil, dehydrated caster oil, hydrogenated caster oil and the like. The use of these active hydrogen containing compounds (A1) increases the chemical resistance and corrosion resistance to metallic materials. The content of the active hydrogen containing compound (A1) is preferably 5 wt % or more based on the solid content of the aqueous urethane resin (F). In case the content is smaller than 5 wt %, the effect of enhancing the chemical resistance and corrosion resistance to various metallic materials is not fully exerted.

The organic polyisocyanate (B) in the present invention is well-known in the urethane industry and any type can be used. Examples of the organic polyisocyanate (B) may include various aromatic, aliphatic, alicyclic isocyanates and the like such as tolylene diisocyanate (TDI), diphenylmethane diisocyanate (MDI), poly methylene poly phenyl poly isocyanate (polymeric MDI), hexamethylene diisocyanate (HMDI), xylylene diisocyanate (XDI), tetramethyl xylylene diisocyanate(TMXDI), isophorone diisocyanate(IPDI), hydrogenated diphenylmethane diisocyanate (H12MDI), trimethyl mexamethylene diisocyanate(TMDI), lysine diisocyanate, naphthalene diisocyanate, norbornane diisocyanate, biuretized hexamethylene diisocyanate, isocyanurated hexamethylene diisocyanate and the like in the form of single component or mixed components.

Examples of the chain elongation agent (C) having the tertiary amino group in the present invention may include N-alkyl dialkanol amine such as N-methyl diethanolamine, N-ethyl diethanolamine and the like, N-alkyl diamino alkylamine such as N-methyl diamino ethylamine, N-ethyl diamino ethylamine and the like. These chain elongation agent (C) having the tertiary amino group may be used in the form of single component or mixed components.

In the present invention, in case where the tertiary amino group introduced by the chain elongation agent (C) is neutralized by an acid, examples of usable acid may includes organic acid such as formic acid, acetic acid, propionic acid, butyric acid, lactic acid, malic acid, malonic acid, adipic acid and the like, and inorganic acid such ashydrochloric acid, phosphoric acid, nitric acid and the like. These acids may be used in the form of single component or mixture of two or more components. In case where the tertiary amino group introduced by the chain elongation agent (C) is quaternarized by a quaternarizing agent, examples of usable quaternarizing agent is halogenated alkyl such as methyl chloride, benzyl chloride and the like, sulfuric acid ester such as dimethyl sulfate, diethyl sulfate and the like. These quaternarizing agents may be used in the form of single component or mixture of two or more components. These acids used for neutralization or quaternarizing agents may be added in such a way that all or some part of the introduced tertiary amino group (C) is neutralized or quaternarized.

All of the number of the amine value in the present specification represent the amount of the tertiary amino group in the solid content before neutralizing or quaternarizing the tertiary amino group of the chain elongation agent (C) having the tertiary amino group introduced in the cationic water-based urethane resin (F).

The elongation of the prepolymer having isocyanate in the terminal of the molecule obtained by neutralizing or quaternarizing may be performed using water or divalent or higher valent polyamine. Examples of the divalent or higher valent polyamine may include aliphatic polyamine compounds such as ethylenediamine, trimethylenediamine, propylenediamine, diethylenetriamine, triethylenetetramine and the like, aromaticpolyamine compounds such as meta-xylenediamine, tolylenediamine, diamino diphenylmethane and the like, alicyclicpolyamine compounds such as piperazine, isophorone diamine and the like, polyhydrazide compounds such as hydrazine, adipic acid dihydrazide and the like. These polyamine compounds may be used in the form of single component or mixture of two or more components. In addition, monovalent amines such as dibutylamine or reaction terminators such as methyl-ethyl-ketoxime may be added in an amount so as not to inhibit the polymerization significantly.

The cross-linking density of the cationic water-based urethane resin (F) is preferably within the range of 0.01-0.50 per 1,000 molecular weight of the cationic urethane resin (F). The cross-linking density herein may be obtained by calculating the following equation 1. More specifically, the cross-linking density per 1,000 of molecularweight of the resin solid content in the cationic aqueous urethane resin (F) may be calculated using the following equation 1, which is obtained by the reaction between $W_{A1}$ g of the compound (A) having two or more active hydrogen atoms with molecular weight $MW_{A1}$ and number of functional groups $F_{A1}$, $W_{A2}$ g of the compound (A) having two or more active hydrogen atoms with molecular weight $MW_{A2}$ and number of functional groups $F_{A2}$, $W_{Aj}$ g of the compound (A) having two or more active hydrogen atoms with molecular weight $MW_{Aj}$ and number of functional groups $F_{Aj}$ (j is an integer number equals to 1 or more), $W_{B1}$ g of the organic polyisocyanate (B) with molecular weight $MW_{B1}$ and number of functional groups $F_{B1}$, $W_{B2}$ g of the organic polyisocyanate (B) with molecular weight $MW_{B2}$ and number of functional groups $F_{B2}$, $W_{Bk}$ g of the organic polyisocyanate (B) with molecular weight $MW_{Bk}$ and number of functional groups $F_{Bk}$ (k is an integer number equals to 1 or more), $W_{C1}$ g of the chain elongation agent (C) having the tertiary amino group with molecular weight $MW_{C1}$ and number of functional groups $F_{C1}$, $W_{cm}$ g of the chain elongation agent (C) having the tertiary amino group with molecular weight $MW_{Cm}$ and number of functional groups Fcm (m is an integer number equals to 1 or more), $W_{E1}$ g of the polyamine compound (E) with molecular weight $MW_{E1}$ and number of functional groups $F_{E1}$, and $W_{En}$ g of the polyamine compound (E) with molecular weight $MW_{En}$ and number of functional groups $F_{En}$ (n is an integer number equals to 1 or more).

Equation 1

$$
\begin{aligned}
\text{Cross-Linking Density} = &\left( \frac{\{W_{A1}(F_{A1}-2)/MW_{A1}\} + \{W_{A2}(F_{A2}-2)/MW_{A2}\} + \cdots + \{W_{Aj}(F_{Aj}-2)/MW_{Aj}\}}{(W_{A1}+W_{A2}+\cdots+W_{Aj}) + (W_{B1}+W_{B2}+\cdots+W_{Bk}) + (W_{C1}+\cdots+W_{Cm}) + (W_{E1}+\cdots+W_{En})} \right. + \\[2mm]
&\frac{\{W_{B1}(F_{B1}-2)/MW_{B1}\} + \{W_{B2}(F_{B2}-2)/MW_{B2}\} + \cdots + \{W_{Bk}(F_{Bk}-2)/MW_{Bk}\}}{(W_{A1}+W_{A2}+\cdots+W_{Aj}) + (W_{B1}+W_{B2}+\cdots+W_{Bk}) + (W_{C1}+\cdots+W_{Cm}) + (W_{E1}+\cdots+W_{En})} + \\[2mm]
&\frac{\{W_{C1}(F_{C1}-2)/MW_{C1}\} + \cdots + \{W_{Cm}(F_{Cm}-2)/MW_{Cm}\}}{(W_{A1}+W_{A2}+\cdots+W_{Ai}) + (W_{B1}+W_{B2}+\cdots+W_{Bk}) + (W_{C1}+\cdots+W_{Cm}) + (W_{E1}+\cdots+W_{En})} + \\[2mm]
&\left. \frac{\{W_{E1}(F_{E1}-2)/MW_{E1}\} + \cdots + \{W_{En}(F_{En}-2)/MW_{En}\}}{(W_{A1}+W_{A2}+\cdots+W_{Aj}) + (W_{B1}+W_{B2}+\cdots+W_{Bk}) + (W_{C1}+\cdots+W_{Cm}) + (W_{E1}+\cdots+W_{En})} \right) \times 1000
\end{aligned}
$$

In case the cross-linking density calculated in this way is lower than 0.01, water resistance becomes lowered due to less cross-linking and the chemical resistance, solvent resistance and corrosion resistance becomes poor, whereas the density higher than 0.05 brings brittle of the resin which often results in a poor adhesion and poor flexibility.

The introduced amount of the chain elongation agent (C) having the tertiary amino group in the cationic aqueous urethane resin (F) is preferably within 5-80 mg KOH/g as the amine value of the solid content of the resin. In case the introduced amount of the tertiary amino group is smaller than 5 mg KOH/g as the amine value, it becomes impossible to emulsify, and even if a surface active agent, a nonionic component or the like is used together with to enable to emulsify, adhesion and water resistance is often decreased. On the other hand, in case of exceeding 80 mg KOH/g, water resistance is also decreased and chemical resistance and corrosion resistance are also lowered.

The glass-transition temperature of the resin solid content contained in the cationic aqueous urethane resin (F) is preferably within the range of 30-120 ˚C. In case the glass-transition temperature is lower than 30 ˚C, water resistance, chemical resistance, corrosion resistance and abrasion resistance are decreased because of the lowering of the cohesive force of the resin, whereas in case of exceeding 120 ˚C, flex resistance is decreased because of the brittleness of the resin. In addition, workability in processing is decreased outside of the range 30-120 ˚C.

As preferable metallic materials for which the water-based coating compositions for surface treatment of metallic material of the present invention are used, steel plates such as cold rolling, hot strip milled steel plate, carbon steel plate and silicon steel plate, various plated sheet steels such as electro-galvanized sheet steel, hot dip galvanized sheet steel, 55% galvanized aluminum alloy sheet steel, 5% galvanized aluminum alloy sheet steel, aluminized sheet steel, iron-zinc plated sheet steel, nickel-plated sheet steel, copper-plated sheet steel, tin-plated sheet steel, zinc-nickel plated sheet steel, and zinc-magnesium plated sheet steel, stainless steel plate, copper plate, metallic materials consist primarily of aluminum or aluminum alloy such as pure aluminum material, aluminum alloy material are exemplified.

In addition, the metallic materials for which the water-based coating compositions for surface treatment of metallic material of the present invention are used may be treated with chromate or phosphate as primer treatment. Under the recent trend for non-chromium due to the problem of deterioration of environment, industrial hygiene and safeness, the compositions of the present invention bring enough corrosion resistance, chemical resistance, solvent resistance and adhesion even if the metallic materials not treated with chromate or phosphate are used.

If necessary, various well-known additives generally used may be added to the water-based coating compositions for surface treatment of metallic materials of the present invention. Examples of such additives may include corrosion inhibitors, corrosion inhibiting pigments, dye stuffs, auxiliary agents for film formation, inorganic cross-linking agents, organic cross-linking agents (for example, cross-linking agent of blocked isocyanates, cross-linking agent of epoxys, cross-linking agent of carbodiimides, cross-linking agent of oxazolines and cross-linking agent of melamines), silane coupling agents, antiblocking agents, viscosity modifiers, leveling agents, defoaming agents, dispersion stabilizers, light stabilizers, antioxidants, ultraviolet absorbers, inorganic fillers, organic fillers, plasticizers, lubricants, antistatic agents and the like.

It is preferable to mix corrosion inhibitors to the water-based coating compositions for surface treatment of metallic materials of the present invention, such as phosphoric acid compounds, chromic acid compounds, vanadium compounds, molybdic acid compounds, zirconium compounds, titanium compounds, cerium compounds, manganese compounds, tungstenic acid compounds, boric acid compounds, nitric acid compounds, hydrofluoric acid, colloidal silica and the like.

Furthermore, the water-based coating compositions for surface treatment of metallic materials of the present invention may be used together with acrylic resins, epoxy resins, polyester resins, polyamide resins, and the like.

(EXAMPLES)

Although the present invention is explained below base on the examples, the present invention will not be limited to these examples.

According to the following procedure, the polyurethane dispersions of the respective examples and the respective comparative examples were prepared, and the cross-linking densities are calculated based on the equation 1 and the amine values and glass-transition temperatures are measured for the solid contents of the respective dispersions, which are listed in table 1 together with the ionicities thereof.

(Example 1)

In a four-neck flask equipped with a stirrer, a reflux condenser, a thermometer and a nitrogen blowing tube, 200 parts by weight of polyesterpolyol (Kurapol P-2010, manufactured by Kuraray Co., Ltd., the number of active hydrogen is 2), 17 parts by weight of N-methyl diethanolamine (the number of active hydrogen is 2), 67 parts by weight of isophorone diisocyanate, and 200 parts by weight of methyl ethyl ketone ware added and stirred for 4 hours at 75 ˚C, to obtain a methyl ethyl ketone solution of urethane prepolymer. The content of free isocyanate group in the nonvolatile matter of the solution was 1.70 %. The solution was then cooled to 45 ˚C, and quaternarized by adding 18 parts by weight of dimethyl sulfate, and thereafter emulsified and dispersed by gradually adding 730 parts by weight of water and using a homogenizer. The solvent in the emulsified or dispersed mixture was removed under reduced pressure at 50 ˚C, to yield a cationic water-based coating composition for surface treatment of metallic materials that includes about 30 % of nonvolatile matter.

(Example 2)

In a four-neck flask equipped with a stirrer, a reflux condenser, a thermometer and a nitrogen blowing tube, 200 parts by weight of polyesterpolyol(Tesrack2477, manufactured by Hitachi Kasei Polymer Co., Ltd., the number of active hydrogen is 2), 20 parts by weight of N-methyl diethanolamine (the number of active hydrogen is 2), 75 parts by weight of isophorone diisocyanate, and 207 parts by weight of methyl ethyl ketone ware added and stirred for 4 hours at 75 ˚C, to obtain a methyl ethyl ketone solution of urethane prepolymer. The content of free isocyanate group in the nonvolatile matter of the solution was 1.5 %. The solution was then cooled to 45 ˚C, and quaternarized by adding 21.2 parts by weight of dimethyl sulfate, and thereafter emulsified and dispersed by gradually adding 1,100 parts by weight of water and using a homogenizer. The solvent in the emulsified or dispersed mixture was removed under reduced pressure at 50 ˚C, to yield a cationic water-based coating composition for surface treatment of metallic materials that includes about 25 % of nonvolatile matter.

(Example 3)

In a four-neck flask equipped with a stirrer, a reflux condenser, a thermometer and a nitrogen blowing tube, 200 parts by weight of polyesterpolyol (Tesrack 2477, manufactured by Hitachi Kasei Polymer Co., Ltd., the number of active hydrogen is 2), 0.5 parts by weight of trimethylolpropane (the number of active hydrogen is 3), 5.0 parts by weight of N-methyl diethanolamine (the number of active hydrogen is 2), 50 parts by weight of isophorone diisocyanate, and 153 parts by weight of methyl ethyl ketone ware added and stirred for 4 hours at 75 ˚C, to obtain a methyl ethyl ketone solution of urethane prepolymer. The content of free isocyanate group in the nonvolatile matter of the solution was 2.0 %. The solution was then cooled to 45 ˚C, and quaternarized by adding 5.30 parts by weight of dimethyl sulfate, and thereafter emulsified and dispersed by gradually adding 670 parts by weight of water and using a homogenizer. The solvent in the emulsified or dispersed mixture was removed under reduced pressure at 50 ˚C, to yield a cationic water-based coating composition for surface treatment of metallic materials that includes about 30 % of nonvolatile matter.

(Example 4)

In a four-neck flask equipped with a stirrer, a reflux condenser, a thermometer and a nitrogen blowing tube, 200 parts by weight of polyesterpolyol(Tesrack2477,manufactured by Hitachi Kasei Polymer Co., Ltd., the number of active hydrogen is 2), 15 parts by weight of trimethylolpropane (the number of active hydrogen is 3), 25 parts by weight of N-methyl diethanolamine (the number of active hydrogen is 2), 140 parts by weight of isophorone diisocyanate, and 304 parts by weight of methyl ethyl ketone ware added and stirred for 4 hours at 75 ˚C, to obtain a methyl ethyl ketone solution of urethane prepolymer. The content of free isocyanate group in the nonvolatile matter of the solution was 3.0 %. The solution was then cooled to 45 ˚C, and quaternarized by adding 26.5 parts by weight of dimethyl sulfate, and thereafter emulsified and dispersed by gradually adding 977 parts by weight of water and using a homogenizer. Then, elongation was carried out by adding 9.2 parts by weight of triethylenetetramine (the number of active hydrogen is 4) under emulsifying and dispersing. The solvent in the emulsified or dispersed mixture was removed under reduced pressure at 50 ˚C, to yield a cationic water-based coating composition for surface treatment of metallic materials that includes about 30 % of nonvolatile matter.

(Example 5)

In a four-neck flask equipped with a stirrer, a reflux condenser, a thermometer and a nitrogen blowing tube, 200 parts by weight of polyesterpolyol (Tesrack 2477, manufactured by Hitachi Kasei Polymer Co., Ltd., the number of active hydrogen is 2), 5 parts by weight of trimethylolpropane (the number of active hydrogen is 3), 110 parts by weight of N-methyl diethanolamine (the number of active hydrogen is 2), 270 parts by weight of isophorone diisocyanate, and 468 parts by weight of methyl ethyl ketone ware added and stirred for 4 hours at 75 ˚C, to obtain a methyl ethyl ketone solution of urethane prepolymer. The content of free isocyanate group in the nonvolatile matter of the solution was 1.7%. The solution was then cooled to 45 ˚C, and quaternarized by adding 29.1 parts by weight of dimethyl sulfate, and thereafter emulsified and dispersed by gradually adding 1,500 parts by weight of water and using a homogenizer. The solvent in the emulsified or dispersed mixture was removed under reduced pressure at 50 ˚C, to yield a cationic water-based coating composition for surface treatment of metallic materials that includes about 30 % of nonvolatile matter.

(Example 6)

In a four-neck flask equipped with a stirrer, a reflux condenser, a thermometer and a nitrogen blowing tube, 200 parts by weight of polyesterpolyol (Tesrack 2477, manufactured by Hitachi Kasei Polymer Co., Ltd., the number of active hydrogen is 2), 5.0 parts by weight of trimethylolpropane (the number of active hydrogen is 3), 25 parts by weight of N-methyl diethanolamine (the number of active hydrogen is 2), 100 parts by weight of isophorone diisocyanate, and 231 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 1.7 %. The solution was then cooled to 45 °C, and quaternarized by adding 26.5 parts by weight of dimethyl sulfate, and thereafter emulsified and dispersed by gradually adding 1, 170 parts by weight of water and using a homogenizer. The solvent in the emulsified or dispersed mixture was removed under reduced pressure at 50 °C, to yield a cationic water-based coating composition for surface treatment of metallic materials that includes about 25 % of nonvolatile matter.

(Example 7)

In a four-neck flask equippedwith a stirrer, a reflux condenser, a thermometer and a nitrogen blowing tube, 200 parts by weight of adduct between bisphenol A and 4 mole of ethyleneoxide (NEWPOL BPE-20NK, manufactured by Sanyo Chemical Industries, Ltd., the number of active hydrogen is 2), 10 parts by weight of trimethylolpropane (the number of active hydrogen is 3), 55.0 parts by weight of N-methyl diethanolamine (the number of active hydrogen is 2), 385 parts by weight of dicyclohexylmethane diisocyanate, and 520 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 3.6 %. The solution was then cooled to 45 °C, and quaternarized by adding 40.8 parts by weight of dimethyl sulfate, and thereafter emulsified and dispersed by gradually adding 1,670 parts by weight of water and using a homogenizer. The solvent in the emulsified or dispersed mixture was removed under reduced pressure at 50 °C, to yield a cationic water-based coating composition for surface treatment of metallic materials that includes about 30 % of nonvolatile matter.

(Example 8)

In a four-neck flask equippedwith a stirrer, a reflux condenser, a thermometer and a nitrogen blowing tube, 200 parts by weight of adduct between bisphenol A and 2 mole of propyleneoxide (POLYETHER BPX-11, manufactured by Asahi Denka Kogyo K.K., the number of active hydrogen is 2), 5.2 parts by weight of trimethylolpropane (the number of active hydrogen is 3), 42.7 parts by weight of N-methyl diethanolamine (the number of active hydrogen is 2), 81 parts by weight of polyethylene glycol (PEG-600S, manufactured by Dai-ichi Kogyo Seiyaku Co., Ltd., the number of active hydrogen is 2), 211.4 parts by weight of tolylene diisocyanate (Colonate T-80, manufactured by Nippon Polyurethane Industry Co., Ltd), and 486 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 1.5 %. The solution was then cooled to 45 °C, and quaternarized by adding 36.2 parts by weight of dimethyl sulfate, and thereafter emulsified and dispersed by gradually adding 1,460 parts by weight of water and using a homogenizer. The solvent in the emulsified or dispersed mixture was removed under reduced pressure at 50 °C, to yield a cationic water-based coating composition for surface treatment of metallic materials that includes about 24 % of nonvolatile matter.

(Example 9)

In a four-neck flask equippedwith a stirrer, a reflux condenser, a thermometer and a nitrogen blowing tube, 200 parts by weight of adduct between bisphenol A and 2 mole of propyleneoxide (POLYETHER BPX-11, manufactured by Asahi Denka Kogyo K.K., the number of active hydrogen is 2), 10 parts by weight of trimethylolpropane (the number of active hydrogen is 3), 25 parts by weight of N-methyl diethanolamine (the number of active hydrogen is 2), 220 parts by weight of isophorone diisocyanate, and 319 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 2.0%. The solution was then cooled to 45 °C, and quaternarized by adding 26.5 parts by weight of dimethyl sulfate, and thereafter emulsified and dispersed by gradually adding 1,613 parts by weight of water and using a homogenizer. The solvent in the emulsified or dispersed mixture was removed under reduced pressure at 50 °C, to yield a cationic water-based coating composition for surface treatment of metallic materials that includes about 25 % of nonvolatile matter.

(Example 10)

In a four-neck flask equippedwith a stirrer, a reflux condenser, a thermometer and a nitrogen blowing tube, 75.6 parts by weight of adduct between bisphenol A and 4 mole of ethyleneoxide (NEWPOL BPE-40, manufactured by Sanyo Chemical Industries, Ltd., the number of active hydrogen is 2), 7.30 parts by weight of trimethylolpropane (the number of active hydrogen is 3), 28.0 parts by weight of N-methyl diethanolamine (the number of active hydrogen is 2), 53.2 parts by weight of polyethylene glycol (PEG-600S, manufactured by Dai-ichi Kogyo Seiyaku Co., Ltd., the number of active hydrogen is 2), 190.8 parts by weight of dicyclohexylmethane diisocyanate, and 266 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 3.2 %. The solution was then cooled to 45 °C, and quaternarized by adding 17.8 parts by weight of dimethyl sulfate, and thereafter emulsified and dispersed by gradually adding 1, 402 parts by weight of water and using a homogenizer. The solvent in the emulsified or dispersed mixture was removed under reduced pressure at 50 °C, to yield a cationic water-based coating composition for surface treatment of metallic materials that includes about 24 % of nonvolatile matter.

(Example 11)

In a four-neck flask equippedwith a stirrer, a reflux condenser, a thermometer and a nitrogen blowing tube, 100 parts by weight of polyol of caster oil (HG 2G-160R, manufactured by Hokoku Corporation, the number of active hydrogen is 2), 12.5 parts by weight of adduct between bisphenol A and 2 mole of propyleneoxide (POLYETHER BPX-11, manufactured by Asahi Denka Kogyo K.K., the number of active hydrogen is 2), 3.5 parts by weight of trimethylolpropane (the number of active hydrogen is 3), 30 parts by weight of N-methyl diethanolamine (the number of active hydrogen is 2), 134 parts by weight of dicyclohexylmethane diisocyanate, and 224 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 1.54 %. The solution was then cooled to 45 °C, and quaternarized by adding 22.3 parts by weight of dimethyl sulfate, and thereafter emulsified and dispersed by gradually adding 1, 141 parts by weight of water and using a homogenizer. The solvent in the emulsified or dispersed mixture was removed under reduced pressure at 50 °C, to yield a cationic water-based coating composition for surface treatment of metallic materials that includes about 25 % of nonvolatile matter.

(Example 12)

In a four-neck flask equipped with a stirrer, a reflux condenser, a thermometer and a nitrogen blowing tube, 200 parts by weight of adduct between bisphenol A and 2 mole of propyleneoxide (POLYETHER BPX-11, manufactured by Asahi Denka Kogyo K.K., the number of active hydrogen is 2), 9.8 parts by weight of trimethylolpropane (the number of active hydrogen is 3), 59.8 parts by weight of N-methyl diethanolamine (the number of active hydrogen is 2), 113.8 parts by weight of polyethylene glycol (PEG-600S, manufactured by Dai-ichi Kogyo Seiyaku Co.,Ltd., the number of active hydrogen is 2), 259 parts by weight of 4,4'-diphenylmethane diisocyanate, 115 parts by weight of isophorone diisocyanate, and 757 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 2.0 %. The solution was then cooled to 45 °C, and quaternarized by adding 31.6 parts by weight of dimethyl sulfate, and thereafter emulsified and dispersed by gradually adding 2,272 parts by weight of water and using a homogenizer. The solvent in the emulsified or dispersed mixture was removed under reduced pressure at 50 °C, to yield a cationic water-based coating composition for surface treatment of metallic materials that includes about 28 % of nonvolatile matter.

(Example 13)

In a four-neck flask equippedwith a stirrer, a reflux condenser, a thermometer and a nitrogen blowing tube, 200 parts by weight of adduct between bisphenol A and 2 mole of propyleneoxide (POLYETHER BPX-11, manufactured by Asahi Denka Kogyo K.K., the number of active hydrogen is 2), 4.5 parts by weight of trimethylolpropane (the number of active hydrogen is 3), 36.3 parts by weight of N-methyl diethanolamine (the number of active hydrogen is 2), 34.5 parts by weight of polyethylene glycol (PEG-600S, manufactured by Dai-ichi Kogyo Seiyaku Co., Ltd., the number of active hydrogen is 2), 184.5 parts by weight of tolylenediisocyanate (Colonate T-80, manufactured by Nippon Polyurethane Industry Co.,Ltd), and 368 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 1.5 %. The solution was then cooled to 45 °C, and quaternarized by adding 23.1 parts by weight of dimethyl sulfate, and thereafter emulsified and dispersed by gradually adding 1, 816 parts by weight of water and using a homogenizer. The solvent in the emulsified or dispersed mixture was removed under reduced pressure at 50 °C, to yield a cationic water-based coating composition for surface treatment of metallic materials that includes about 24 % of nonvolatile matter.

(Example 14)

In a four-neck flask equipped with a stirrer, a reflux condenser, a thermometer and a nitrogen blowing tube, 200 parts by weight of adduct between bisphenol A and 2 mole of propyleneoxide (POLYETHER BPX-11, manufactured by Asahi Denka Kogyo K.K., the number of active hydrogen is 2), 4.5 parts by weight of trimethylolpropane (the number of active hydrogen is 3), 36.3 parts by weight of N-methyl diethanolamine (the number of active hydrogen is 2), 34.5 parts by weight of polyethylene glycol (PEG- 600S, manufactured by Dai-ichi Kogyo Seiyaku Co., Ltd., the number of active hydrogen is 2), 184.5 parts by weight of tolylene diisocyanate (Colonate T-80, manufactured by Nippon Polyurethane Industry Co.,Ltd), and 368 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 1.5 %. Next, 23 parts by weight of cross-linking agent of blocked isocyanate (ELASTORON BN-P17, manufactured by Dai-ichi Kogyo Seiyaku Co.,Ltd.) The solution was then cooled to 45 °C, and quaternarized by adding 23.1 parts by weight of dimethyl sulfate, and thereafter emulsified and dispersed by gradually adding 1,305 parts by weight of water and using a homogenizer. The solvent in the emulsified or dispersed mixture was removed under reduced pressure at 50 °C, to yield a cationic water-based coating composition for surface treatment of metallic materials that includes about 28 % of nonvolatile matter.

(Comparative Example 1)

In a four-neck flask equipped with a stirrer, a reflux condenser, a thermometer and a nitrogen blowing tube, 200 parts by weight of polyesterpolyol (Tesrack2477, manufactured by Hitachi Kasei Polymer Co., Ltd., the number of active hydrogen is 2), 4 parts by weight of trimethylolpropane (the number of active hydrogen is 3), 12 parts by weight of dimethylol propionic acid (the number of active hydrogen is 2), 80 parts by weight of dicyclohexylmethane diisocyanate, and 207 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 1.5 %. The solution was then cooled to 45 °C, and neutralized by adding 9.1 parts by weight of triethylamine, and thereafter emulsified and dispersed by gradually adding 761 parts by weight of water and using a homogenizer. The solvent in the emulsified or dispersed mixture was removed under reduced pressure at 50 °C, to yield a anionic water-based polyurethane coating composition that includes about 30 % of nonvolatile matter.

(Comparative Example 2)

In a four-neck flask equipped with a stirrer, a reflux condenser, a thermometer and a nitrogen blowing tube, 200 parts by weight of polyesterpolyol(Tesrack2477, manufactured by Hitachi Kasei Polymer Co., Ltd., the number of active hydrogen is 2), 3 parts by weight of trimethylolpropane (the number of active hydrogen is 3), 25 parts by weight of polyethylene glycol (PEG-600S, manufactured by Dai-ichi Kogyo Seiyaku Co.,Ltd.), 65 parts by weight of dicyclohexylmethane diisocyanate, and 205 parts by weight of methyl ethyl ketone ware added and stirred for 4 hours at 75 °C, to obtain a methyl ethyl ketone solution of urethane prepolymer. The content of free isocyanate group in the nonvolatile matter of the solution was 1.5 %. The solution was then cooled to 45 °C, and added by 14.7 parts by weight of nonionic surface active agent (Noygen EA-157, manufactured by Dai-ichi Kogyo Seiyaku Co., Ltd.), and thereafter emulsified and dispersed by gradually adding 753 parts by weight of water and using a homogenizer. The solvent in the emulsified or dispersed mixture was removed under reduced pressure at 50 °C, to yield a nonionic water-based polyurethane coating composition that includes about 30 % of nonvolatile matter.

Table 1

| | Example 1 | Example 2 | Example 3 | Example 4 | Example 5 | Example 6 | Example 7 | Example 8 | Example 9 | Example 10 | Example 11 | Example 12 | Example 13 | Example 14 | Comp. Example 1 | Comp. Example 2 |
|---|---|---|---|---|---|---|---|---|---|---|---|---|---|---|---|---|
| Ionicity | Cation | Cation | Cation | Cation | Cation | Cation | Cation | Cation | Cation | Cation | Cation | Cation | Cation | Cation | Anion | Nonion |
| Cross-linking Density | 0 | 0 | 0.015 | 0.61 | 0.064 | 0.113 | 0.115 | 0.072 | 0.164 | 0.153 | 0.093 | 0.096 | 0.073 | 0.073 | 0.101 | 0.076 |
| Amine Value | 28.2 | 31.9 | 9.2 | 26.5 | 88.5 | 35.7 | 39.8 | 37.2 | 25.9 | 37.1 | 50.4 | 37.2 | 37.2 | 35.4 | 0 | 0 |
| Glass Transition Point (degree C) | -32 | 10 | 0 | 42 | 95 | 32 | 140 | 85 | 72 | 60 | 35 | 90 | 80 | 85 | 43 | 17 |

∗ Method of measuring glass transition temperature ; Dynamic viscoelasticity measuring apparatus (Rheogel-E4000, manufactured by UBM)

Frequency 10Hz, Temperature Rising Rate 2 degree / minute.

The temperature at which the loss elastic modulus (E") reached to the maximum was read out.

[Preparation Of Water-based Coating Compounds For Surface Treatment Of Metallic Materials And Test Pieces]

According to Table 2, water-based coating Compounds for surface treatment of metallic materials of Test Examples and Comparative Test Examples were prepared by adding phosphoric acid to the water-based polyurethane of each of the examples and the comparative examples. The water-based coating Compounds for surface treatment of metallic materials were coated on electrolytic zinc-coated carbon steel sheets (chromate treatment, provided by ; Zincoat), electrolytic zinc-coated carbon steel sheets (non-chromate treatment, provided by Taiyu Kizai ; Unizinc) and aluminum plates (provided by A-1100P) so as to become 1 $g/m^2$ (in terms of solid content) in thickness using bar coater and dried so that PMT (maximum reaching temperature) reaches at 80 ˚C to obtain the test pieces.

[Test Examples And Comparative Test Examples]

The evaluation tests of corrosion resistance, chemical resistance, solvent resistance, adhesion and flex resistance were conducted using the above-mentioned test pieces, the results of which are listed in Tabled 2.

<Method Of Testing And Evaluation Criteria >

(1) Alkaline Resistance

Each test piece was immersed in 1 % NaOH aqueous solution for 5 hours at ambient temperature, then observed change in color of appearance thereof. Evaluation criteria are as follows:
○ almost no change in color
Δ slightly changed in color
×Δ a little change in color
× large amount of change in color

(2) Corrosion Resistance

Each test piece was evaluated using salt spray testing apparatus. Evaluation time is 240 hours for electrolytic zinc-coated carbon steel sheets, and 1,000 hours for aluminum plates. Evaluation criteria are as follows:
○ rate of incidence of rust is 10 % or less
Δ rate of incidence of rust is 10-20 % or less
×Δ rate of incidence of rust is 20-50 % less
× rate of incidence of rust is 50 % or more.

(3) Solvent Resistance

Rubbing test by methyl ethyl ketone was conducted for each of the test pieces, then change in color of appearance thereof was observed. Evaluation criteria are as follows:
○ almost no change in color
Δ a little change in color
× large amount of change in color

(4) Adhesion

1 mm Cross cut peel test by adhesive tape was conducted for each of the test pieces. Evaluation criteria are as follows:
○ 90-100/100
Δ 50-90/100
× 0-50/100

(5) Flex Resistance

Flexibility was evaluated for each of the test pieces using Erichsen tester (8mm). Evaluation criteria are as follows:

○ no crack and no exfoliation
Δ partial crack or exfoliation
✕ overall crack or exfoliation

Table 2 Formulation for each Example and Estimation

| | Test Example 1 | Test Example 2 | Test Example 3 | Test Example 4 | Test Example 5 | Test Example 6 | Test Example 7 | Test Example 8 | Test Example 9 | Test Example 10 | Test Example 11 | Test Example 12 | Test Example 13 | Test Example 14 | Comp. Test Ex. 1 | Comp. Test Ex. 2 |
|---|---|---|---|---|---|---|---|---|---|---|---|---|---|---|---|---|
| Example 1 | 100 | | | | | | | | | | | | | | | |
| Example 2 | | 100 | | | | | | | | | | | | | | |
| Example 3 | | | 100 | | | | | | | | | | | | | |
| Example 4 | | | | 100 | | | | | | | | | | | | |
| Example 5 | | | | | 100 | | | | | | | | | | | |
| Example 6 | | | | | | 100 | | | | | | | | | | |
| Example 7 | | | | | | | 100 | | | | | | | | | |
| Example 8 | | | | | | | | 100 | | | | | | | | |
| Example 9 | | | | | | | | | 100 | | | | | | | |
| Example 10 | | | | | | | | | | 100 | | | | | | |
| Example 11 | | | | | | | | | | | 100 | | | | | |
| Example 12 | | | | | | | | | | | | 100 | | | | |
| Example 13 | | | | | | | | | | | | | 100 | | | |
| Example 14 | | | | | | | | | | | | | | 100 | | |
| Comp.Exp.1 | | | | | | | | | | | | | | | 100 | |
| Comp.Exp.2 | | | | | | | | | | | | | | | | 100 |
| Phosphoric acid | 5 | 5 | 5 | 5 | 5 | 5 | 5 | 5 | 5 | 5 | 5 | 5 | 5 | 5 | 5 | 5 |
| Sheet Steel | ①②③ | ①②③ | ①②③ | ①②③ | ①②③ | ①②③ | ①②③ | ①②③ | ①②③ | ①②③ | ①②③ | ①②③ | ①②③ | ①②③ | ①②③ | ①②③ |
| Alkali Resistance | △△△ | △△△ | △△△ | △△△ | △△△ | △△△ | △△△ | ○○○ | ○○○ | ○○○ | ○○○ | ○○○ | ○○○ | ○○○ | ××× | ××× |
| Corrosion Resistance | ×△ ×△ ×△ | ×△ ×△ ×△ | △ ×△ △ | △ ×△ △ | ×△ ×△ ×△ | ○△○ | ○○○ | ○○○ | ○○○ | ○○○ | ○○○ | ○○○ | ○○○ | ○○○ | ××× | ××× |
| Solvent Resistance | △△△ | △△△ | △△△ | △△△ | △△△ | △△△ | △△△ | ○○○ | ○○○ | ○○○ | ○○○ | ○○○ | ○○○ | ○○○ | △△△ | ××× |
| Adhesion | ○△△ | ○△△ | ○△△ | ○○○ | ○○○ | ○○○ | ○○○ | ○○○ | ○○○ | ○○○ | ○○○ | ○○○ | ○○○ | ○○○ | △△△ | ××× |
| Flex Resistance | ○○○ | ○○○ | △△△ | △△△ | △△△ | ○○○ | △△△ | ○○○ | ○○○ | ○○○ | ○○○ | ○○○ | ○○○ | ○○○ | △△△ | ××× |

*Blending quantity of phosphoric acid is based on 100 parts by weight of solid content of each water-based polyurethane dispersion.

\* ① is electrolytic zinc-coated carbon steel sheet (chromate treatment, provided by                              ;Zincoat).

② is electrolytic zinc-coated carbon steel sheet (non-chromate treatment, provided by Taiyu Kizai      ;Unizinc).

③ is aluminum plate (provided by                              ;A-1100P).

EP 1 739 144 A1

The test pieces prepared with the water-based coating compositions for surface treatment of metallic materials of the respective examples reveals more satisfying result than those prepared with the water-based polyurethane dispersions of the comparative examples in each test of corrosion resistance, chemical resistance, solvent resistance, adhesion and flex resistance. In addition, the test pieces prepared with the composition that the cross-linking density is within the range of 0.01-0.50, the amine value of the tertiary amine introduced is within the range of 5-60 mg KOH/g, and the glass-transition temperature is within the range of 30-120 ˚C reveal excellent result.

[Industrial Applicability]

According to the present invention, corrosion resistance, chemical resistance, solvent resistance, adhesion and flex resistance can be attained for various metal materials, so that it is possible to be applied to metal materials such as the metal plates or parts that requires corrosion resistance etc. and used for, especially, automobiles, civil engineering materials, building materials, steel furniture, electronic products etc.

**Claims**

1.  A water-based coating composition for surface treatment of metallic material comprising a cationic aqueous urethane resin (F) which is obtained by chain-elongation of a cationic urethane prepolymer (D) using water or a polyamine compound (E), the cationic urethane prepolymer (D) being formed by neutralizing a tertiary amino group by an acid or quaternarizing the tertiary amino group by quaternarizing agent, the tertiary amino group being included in a urethane prepolymer comprising, as components thereof, a compound (A) having two or more active hydrogen atoms, an organic polyisocyanate (B), and a chain elongation agent (C) having the tertiary amino group.

2.  The water-based coating composition for surface treatment of metallic material according to claim 1, the cross-linking density of the resin solid content contained in the cationic aqueous urethane resin (F) is within the range of 0.01-0.50 per 1,000 molecular weight.

3.  The water-based coating composition for surface treatment of metallic material according to claim 1 or 2, the amount of the introduced chain elongation agent (C) having the tertiary amino group in the cationic aqueous urethane resin (F) is within the range of 5-80mg KOH/g as amino value of the resin solid content.

4.  The water-based coating composition for surface treatment of metallic material according to any one of claims 1 to 3, wherein the glass-transition temperature of the resin solid content contained in the cationic aqueous urethane resin (F) is within the range of 30-120 ˚C.

5.  The water-based coating composition for surface treatment of metallic material according to any one of claims 1 to 4, wherein the compound (A) having two or more active hydrogen atoms includes at least one active hydrogen containing compound (A1) selected from the group consisting of oxyalkylene derivatives of bisphenol A, olefinic polyols and polyols of vegetable oils.

6.  The water-based coating composition for surface treatment of metallic material according to claim 5, wherein the active hydrogen containing compound (A1) is contained in an amount of 5 % by weight or more base on the solid content of the aqueous urethane resin (F).

**INTERNATIONAL SEARCH REPORT**

| International application No. |
| --- |
| PCT/JP2005/004651 |

A. CLASSIFICATION OF SUBJECT MATTER
Int.Cl$^7$  C09D175/04, 5/02, 5/08, C23C26/00

According to International Patent Classification (IPC) or to both national classification and IPC

B. FIELDS SEARCHED

Minimum documentation searched (classification system followed by classification symbols)
Int.Cl$^7$  C09D1/00-C09D201/10, C23C26/00-C23C26/02

Documentation searched other than minimum documentation to the extent that such documents are included in the fields searched
Jitsuyo Shinan Koho          1922-1996    Jitsuyo Shinan Toroku Koho    1996-2005
Kokai Jitsuyo Shinan Koho    1971-2004    Toroku Jitsuyo Shinan Koho    1994-2005

Electronic data base consulted during the international search (name of data base and, where practicable, search terms used)
CA(STN), WPI(DIALOG)

C. DOCUMENTS CONSIDERED TO BE RELEVANT

| Category* | Citation of document, with indication, where appropriate, of the relevant passages | Relevant to claim No. |
| --- | --- | --- |
| X | JP 11-269243 A  (Arakawa Chemical Industries, Ltd.), 05 October, 1999 (05.10.99), Full text (particularly, Par. No. [0001]) (Family: none) | 1-6 |
| X | JP 10-86505 A  (Nicca Chemical Co., Ltd.), 07 April, 1998 (07.04.98), Full text (particularly, Claims) & EP 829574 A1          & US 6140412 A | 1-6 |
| X | JP 2003-80826 A  (Dai-Ichi Kogyo Seiyaku Co., Ltd.), 19 March, 2003 (19.03.03), Full text (particularly, Claims), (Family: none) | 1-6 |

| ☒ | Further documents are listed in the continuation of Box C. | ☐ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search<br>13 June, 2005 (13.06.05) | Date of mailing of the international search report<br>05 July, 2005 (05.07.05) |
| --- | --- |
| Name and mailing address of the ISA/<br>  Japanese Patent Office | Authorized officer |
| Facsimile No. | Telephone No. |

Form PCT/ISA/210 (second sheet) (January 2004)

**EP 1 739 144 A1**

<table>
<tr><td colspan="2" style="text-align:center">INTERNATIONAL SEARCH REPORT</td><td>International application No.<br>PCT/JP2005/004651</td></tr>
</table>

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2003-80825 A  (Dai-Ichi Kogyo Seiyaku Co., Ltd.), 19 March, 2003 (19.03.03), Full text (particularly, Claims), (Family: none) | 1-6 |
| X | JP 2002-307811 A  (Dai-Ichi Kogyo Seiyaku Co., Ltd.), 23 October, 2002 (23.10.02), Full text (particularly, Claims), (Family: none) | 1-6 |
| X | JP 2002-307812 A  (Dai-Ichi Kogyo Seiyaku Co., Ltd.), 23 October, 2002 (23.10.02), Full text (particularly, Claims), (Family: none) | 1-6 |
| Y | JP 2000-104015 A  (Dai-Ichi Kogyo Seiyaku Co., Ltd.), 11 April, 2000 (11.04.00), Full text (particularly, Claims), (Family: none) | 1-6 |

Form PCT/ISA/210 (continuation of second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003129253 A
- JP 2003201579 A

- JP 2003226728 A